# EUROPÄISCHE PATENTSCHRIFT

(11) **EP 2 693 061 B1**
(45) Veröffentlichungstag und Bekanntmachung des Hinweises auf die Patenterteilung: **28.12.2016**
(21) Anmeldenummer: 13003788.0
(22) Anmeldetag: 30.07.2013
(51) Int. Cl.: F04D 29/32, F01D 5/14, B23P 15/04, F01D 5/28

(54) **Verdichterschaufel einer Gasturbine sowie Verfahren zu deren Herstellung**
Compressor blade of a gas turbine and method for its manufacturing
Aube de compresseur d'une turbine à gaz et son procédé de fabrication

(30) Priorität: 30.07.2012 DE 102012015135
(43) Veröffentlichungstag der Anmeldung: 05.02.2014
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)
(74) Vertreter: Hoefer & Partner Patentanwälte mbB

(56) Entgegenhaltungen:
- EP-A1- 1 450 006
- EP-A2- 1 939 402
- EP-A2- 1 939 403
- FR-A1- 2 953 430
- GB-A- 2 482 247

## Beschreibung

Die Erfindung bezieht sich auf eine Verdichterschaufel eines Fans einer Fluggasturbine mit einem Schaufelblatt aus einem faserverstärkten Kunststoff und einem mit dem Schaufelblatt verbundenen Eintrittskantenelement sowie auf ein Verfahren zur Herstellung einer derartigen Verdichterschaufel. Die Erfindung bezieht sich auch auf stationäre Gasturbinen.

Aus dem Stand der Technik ist es bekannt, Verdichterschaufeln für Turbinen aus metallischen Werkstoffen zu gießen oder zu schmieden. Weiterhin zeigt der Stand der Technik Verdichterschaufeln, welche aus faserverstärkten Kunststoffen, beispielsweise kohlefaserverstärkten Kunststoffen, hergestellt werden.

Bei Schaufeln aus faserverstärkten Kunststoffen ist es erforderlich, eine metallische Eintrittskante aufzubringen, welche üblicherweise aus einer Titanlegierung besteht. Bei den bekannten Verfahren wird die Eintrittskante, welche auch als Eintrittskantenelement ausgebildet sein kann, adhäsiv mit dem aus faserverstärktem Kunststoff gefertigten Schaufelblatt verbunden. Dabei umschließt die Eintrittskante bzw. das Eintrittskantenelement sowohl einen Teil der Druckseite sowie einen Teil der Saugseite der Verdichterschaufel, um diese vor mechanischen Beschädigungen zu schützen. Derartige mechanische Beschädigungen können beispielsweise durch einen Vogelschlag, durch eintretende Fremdkörper oder durch Erosion auftreten.

Das metallische Eintrittskantenelement ist bei derartigen Verdichterschaufeln hinsichtlich der Lebensdauer, der Festigkeit, der Applizierbarkeit und der Herstellungskosten kritisch. Bei Fans von Fluggasturbinen werden vielfach stark verdrillte oder getwistete bzw. gesichelte Schaufelblätter des Fans verwendet. Diese weisen eine sehr komplexe Geometrie auf, insbesondere hinsichtlich der Eintrittskante oder Anströmkante. Diese komplexe Geometrie ergibt sich sowohl aus strömungstechnischen Optimierungen als auch hinsichtlich der Herstellbarkeit. Insofern kann es sich als sehr schwierig erweisen, geeignete Eintrittskantenelemente herzustellen und mit den Schaufelblättern zu verbinden.

Eine weitere Anforderung besteht hinsichtlich der Verbindung zwischen dem Eintrittskantenelement und dem aus faserverstärkten Kunststoff gefertigten Schaufelblatt. Rein adhäsive Verbindungen (Verklebungen) zwischen der durch das Schaufelblatt gebildeten tragenden Struktur und dem metallischen Eintrittskantenelement sind hinsichtlich der Lebensdauer und der Herstellbarkeit aufwändig und fehlerbehaftet.

Die GB 2482247 A beschreibt eine Schaufel mit einem Eintrittskantenelement, welches aus zwei Teilelementen gefertigt ist. Diese bringen jedoch keine Klemmwirkung auf das Schaufelblatt auf. Über die Herstellung werden keine näheren Aussagen gemacht.

Die EP 1 939 403 A2 beschreibt eine Hybrid-Fanschaufel gemäß dem Oberbegriff des Anspruchs 1, bei welcher das Schaufelblatt aus einem faserverstärkten Kunststoff gefertigt ist und bei welchem ein einstückiges Eintrittskantenelement mit dem Schaufelblatt verbunden wird. Der Schaufelblatt selbst ist mit Deckblechen belegt.

Aus der EP 1 450 006 A1 ist eine weitere Verdichterschaufel für ein Flugzeugtriebwerk bekannt, bei welcher ein Führungskanten-Formstück mit einem Schaufelkern verbunden ist. Auf den Schaufelkern ist beidseitig ein Metallgewebe aufgelegt, um jeweils ein Deckblech zu halten.

Die FR 2 953 430 A1 beschreibt eine Fanschaufel mit einem einstückigen Eintrittskantenelement.

Aus der EP 1 939 402 A2 ist eine Fanschaufel mit einer Tragstruktur aus Faserverbundmaterial vorbekannt, bei welcher beidseitig Deckbleche befestigt sind, welche über Schweißnähte mit einem Führungskanten-Formstück verbunden sind.

Der Erfindung liegt die Aufgabe zugrunde, eine Verdichterschaufel eines Fans der eingangs genannten Art sowie ein Verfahren zu deren Herstellung zu schaffen, welche bei einfachem Aufbau und einfacher, kostengünstiger Herstellbarkeit die Nachteile des Standes der Technik vermeiden und insbesondere eine hohe Lebensdauer der Verdichterschaufel gewährleisten.

Erfindungsgemäß wird die Aufgabe durch die Merkmalskombination des Hauptanspruchs 1 gelöst, die Unteransprüche zeigen weitere vorteilhafte Ausgestaltungen der Erfindung.

Erfindungsgemäß ist somit vorgesehen, dass das Schaufelblatt selbst aus einem faserverstärkten Kunststoff hergestellt wird. Dies kann beispielsweise ein kohlefaserverstärkter Kunststoff sein, der nach üblichen Herstellungsverfahren verarbeitet wird. Erfindungsgemäß wird das Eintrittskantenelement in Form von zwei Teilelementen ausgebildet, welche separat gefertigt werden können, beispielsweise mittels eines Umformverfahrens oder eines Schmiedeverfahrens. Somit ist es möglich, sehr komplexe Geometrien für die beiden Teilelemente des Eintrittskantenelements zu realisieren. Dabei erweist es sich als besonders vorteilhaft, wenn die beiden Teilelemente so konzipiert sind, dass sie keine Hinterschneidungen aufweisen. Hierdurch vereinfacht sich die Herstellung, da einfachere Werkzeuge verwendet werden können.

Die beiden Teilelemente werden erfindungsgemäß nachfolgend zu einem einzigen Eintrittskantenelement verbunden. Dies erfolgt bevorzugterweise mittels einer Schweißverbindung, bevorzugterweise mittels eines Laser-Schweißverfahrens. Es ist jedoch auch möglich, die beiden Teilelemente mittels anderer Verfahren kraftschlüssig oder formschlüssig miteinander zu verbinden, beispielsweise mittels Bolzen, Nieten oder Schrauben.

Erfindungsgemäß ist vorgesehen, dass die beiden Teilelemente vor ihrer Verbindung zunächst auf das Schaufelblatt aufgelegt und an diesem fixiert oder befestigt werden. Dies kann beispielsweise mittels einer Klebefolie erfolgen.

Die beiden Teilelemente sind erfindungsgemäß so dimensioniert und ausgebildet, dass sie hinsichtlich ihrer freien Enden eine Klemmkraft oder Vorspannkraft auf das Schaufelblatt aufbringen. Hierdurch ist gewährleistet, dass die Fixierung, beispielsweise mittels der Klebefolie, in zuverlässiger Weise erfolgt und dass die beiden Endbereiche der Teilelemente sich in fester Anlage gegen das Schaufelblatt befinden.

Erfindungsgemäß ist es besonders vorteilhaft, wenn die Schweißnaht einen möglichst großen Abstand zu dem nichtmetallischen Schaufelblatt aufweist. Die thermische Belastung während des Schweißprozesses wird somit, bedingt auch durch die schlechte Wärmeleitfähigkeit der üblicherweise verwendeten Titanlegierungen, minimiert, so dass das Material des Schaufelblattes nicht durch den Schweißvorgang beeinflusst wird.

Erfindungsgemäß hat es sich als besonders vorteilhaft erwiesen, die beiden Teilelemente mittels eines Laser-Schweißverfahrens zu verbinden. Dieses kann mit hoher Qualität und geringer Streckenenergie durchgeführt werden.

Durch das Verschweißen der beiden Teilelemente im vorgespannten Zustand wird sichergestellt, dass die auf das Schaufelblatt aufzubringende Vorspannkraft in der fertigen Verdichterschaufel aufrechterhalten wird.

Da erfindungsgemäß die beiden Teilelemente aus demselben Werkstoff gefertigt werden, kann eine Verschweißung mit hoher Güte durchgeführt werden, da gleiche Werkstoffeigenschaften vorliegen.

Die beiden Teilelemente bilden somit im Querschnitt die zwei Schenkel des Eintrittskantenelements, welche das Schaufelblatt sowohl auf der Druckseite als auch auf der Saugseite im Bereich der Eintrittskante umschließen. Hierdurch ergibt sich ein wirksamer Schutz der Verdichterschaufel bei auftretenden Belastungen, beispielsweise einem Vogelschlag oder bei auftreffenden Partikeln, beispielsweise Sandkörnern oder Steinen.

Das erfindungsgemäße Verfahren ist in kostengünstiger Weise auch bei sehr komplexen Formen von Verdichterschaufeln anwendbar. Derartige Verdichterschaufeln können beispielsweise eine Länge von 1,3 m aufweisen. Der sich in Strömungsrichtung erstreckende Bereich der beiden Teilelemente kann beispielsweise 100 mm betragen. Die Dicke der auf dem Schaufelblatt aufliegenden Bereiche kann beispielsweise bis zu einem minimalen Betrag von 0,2 mm betragen.

Ein weiterer, wesentlicher Vorteil der erfindungsgemäßen Lösung besteht darin, dass die Teilelemente mit einer hohen Fertigungstoleranz hergestellt werden können, da die elastische Federvorspannung zur Aufbringung der Klemmkraft bzw. Vorspannkraft geringfügige Fertigungstoleranzen ausgleichen kann.

Durch die Einbringung eines Anströmkantenelements zwischen die beiden Teilelemente ist es möglich, eine selbstschärfende Anströmkante auszubilden. Ein derartiges Anströmkantenelement kann beispielsweise aus Manganhartstahl oder aus Stellite bestehen.

In Weiterbildungen der Erfindung ist es auch möglich, zusätzlich eine formschlüssige Verbindung zwischen den beiden Teilelementen und dem Schaufelblatt vorzusehen, beispielsweise durch eine in dem Schaufelblatt ausgebildete Nut, in welche ein Teilbereich zumindest eines der Teilelemente eingreift.

Die erfindungsgemäße Lösung ermöglicht es weiterhin, im Reparaturfall das Eintrittskantenelement auszutauschen, indem die Schweißnaht aufgetrennt und nach erfolgter Reparatur mit den gleichen oder erneuerten metallischen Komponenten appliziert wird. Ein weiterer Vorteil ergibt sich darin, dass die zur Verklebung des Eintrittskantenelements mit dem Schaufelblatt erforderlichen Klebespalte in einfacher Weise bereitgestellt werden kann.

Die Erfindung wird bevorzugt bei einem Fan einer Fluggasturbine verwendet.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine teil-perspektivische Ansicht, teils im Schnitt, eines Ausführungsbeispiels einer erfindungsgemäßen Verdichterschaufel,
- Fig. 3: eine Ansicht analog Fig. 2 eines weiteren Ausführungsbeispiels, und
- Fig. 4: eine Detaildarstellung gemäß Fig. 3.

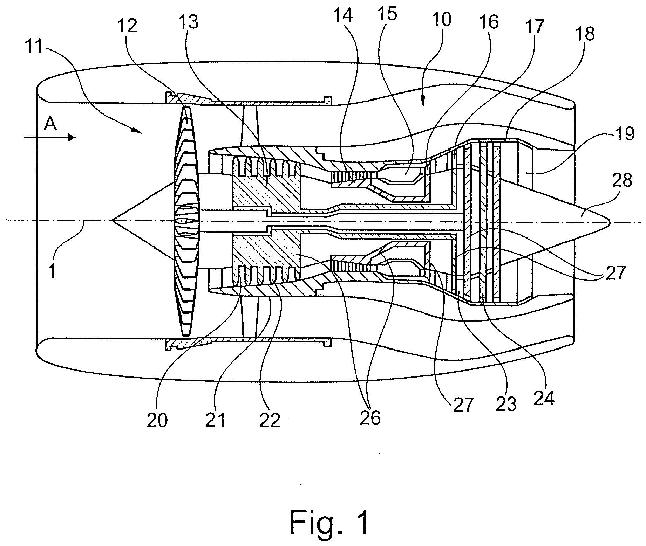

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

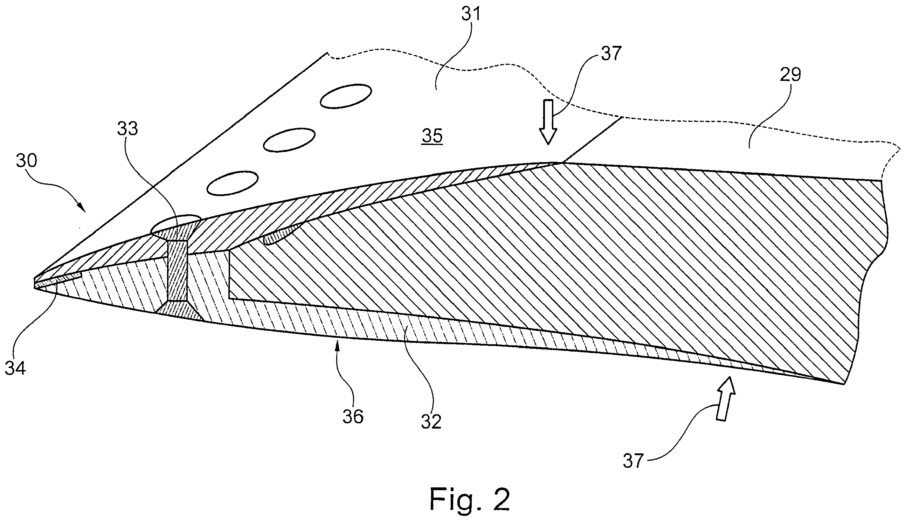

Die Fig. 2 zeigt in teil-perspektivischer Darstellung eine erfindungsgemäße Verdichterschaufel. Diese umfasst ein Schaufelblatt 29, welches aus einem faserverstärkten Kunststoff hergestellt ist. An der Anströmseite des Schaufelblatts 29 ist ein Eintrittskantenelement 30 angeordnet, welches aus einem ersten Teilelement 31 und einem zweiten Teilelement 32 gebildet wird. Das erste Teilelement 31 ist im Wesentlichen an der Saugseite 35 angeordnet, während das zweite Teilelement 32 im Wesentlichen an der Druckseite 36 vorgesehen ist. Die beiden Teilelemente 31 und 32 sind im anströmseitigen Bereich bei dem in Fig. 2 gezeigten Ausführungsbeispiel mittels Verbindungselementen 33 verbunden. Diese Verbindungselemente können in Form von Bolzen, Nieten oder Schrauben ausgebildet sein. Im Kontaktbereich der Teilelemente 31 und 32 kann ein Anströmkantenelement 34 vorgesehen sein, welches eine Profilierung oder Schärfe der Eintrittskante gewährleistet.

Die beiden stromab angeordneten Schenkel des ersten Teilelements 31 und des zweiten Teilelements 32 bringen jeweils eine Klemmkraft oder Vorspannkraft 37 auf das Schaufelblatt 29 auf.

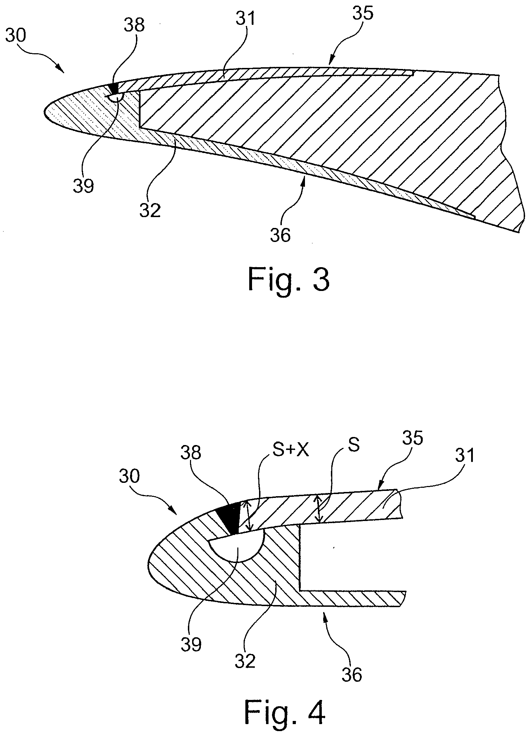

Die Fig. 3 und 4 zeigen ein alternatives Ausführungsbeispiel, bei welchem die beiden Teilelemente 31 und 32 mittels einer Schweißnaht 38 verbunden sind. Um ein Durchschweißen zu sichern, kann zusätzlich ein kanalartiger Freiraum 39 vorgesehen sein. Weiterhin kann es sich, wie in Fig. 4 dargestellt, als vorteilhaft erweisen, die Materialdicke des ersten Teilelements 31 im Bereich der Schweißnaht 38 zu vergrößern, so wie dies durch den Doppelpfeil s+x im Vergleich zu der Materialdicke gemäß dem Doppelpfeil s dargestellt ist.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Schaufelblatt
- 30: Eintrittskantenelement
- 31: erstes Teilelement
- 32: zweites Teilelement
- 33: Verbindungselement (Bolzen, Niete, Schraube)
- 34: Anströmkantenelement
- 35: Saugseite
- 36: Druckseite
- 37: Klemmkraft/Vorspannkraft
- 38: Schweißnaht
- 39: Freiraum

## Patentansprüche

1. Verfahren zur Herstellung einer Verdichterschaufel einer Gasturbine, bei welchem aus faserverstärktem Kunststoff ein Schaufelblatt (29) gefertigt wird und bei welchem ein Eintrittskantenelement (30) mit dem Schaufelblatt (29) verbunden wird, wobei
- wobei ein erstes (31) und ein zweites (32) Teilelement des Eintrittskantenelements (30) aus einem metallischen Werkstoff gefertigt werden, und
- die Teilelemente (31, 32) vor ihrer Verbindung einzeln mittels eines Klebeverfahrens auf dem Schaufelblatt (29) appliziert werden, und
- die beiden Teilelemente kraft- oder formschlüssig miteinander zu einem einzigen Eintrittskantenelemente verbunden werden;
- **dadurch gekennzeichnet, dass** die Teilelemente (31, 32) hinsichtlich ihrer freien Enden zur Fixierung des Eintrittskantenelements mit dem Schaufelblatt eine Klemmkraft auf das Schaufelblatt aufbringen.

2. Verfahren nach Anspruch 1, **dadurch gekennzeichnet, dass** die Teilelemente (31, 32), zur Aufbringung einer Anpresskraft durch Vorspannung, passgenau gefertigt werden.

3. Verfahren nach einem der Ansprüche 1 oder 2, **dadurch gekennzeichnet, dass** die Teilelemente (31, 32) mittels eines Schweißverfahrens, bevorzugt eines Laser-Schweißverfahrens, im vorgespannten, auf dem Schaufelblatt (29) montierten Zustand verschweißt werden.

4. Verdichterschaufel nach Anspruch 1 oder 2, **dadurch gekennzeichnet, dass** die beiden Teilelemente (31, 32) mittels Verbindungselementen (33), insbesondere mittels Bolzen oder Schrauben, miteinander verbunden werden.

5. Verfahren nach einem der Ansprüche 1 bis 4, **dadurch gekennzeichnet, dass** zwischen den Teilelementen (31, 32) ein sich zumindest über einen Teil der Länge der Verdichterschaufel erstreckendes Anströmkantenelement (34) befestigt wird.

6. Verwendung einer Schaufel nach einem der Ansprüche 1 bis 5 für einen Fan (12) einer Fluggasturbine.

## Claims

1. Method for manufacturing a compressor blade of a gas turbine, in which an airfoil (29) is made of fiber-reinforced plastic, and in which a leading-edge element (30) is connected to the airfoil (29), where
- a first (31) and a second (32) partial element of the leading-edge element (30) are made of a metallic material, and
- the partial elements (31, 32) are individually applied to the airfoil (29) by means of a bonding method before being connected, and
- the two partial elements are connected to one leading-edge element by a friction-type or positive locking,
**characterized in that**
the partial elements (31, 32), as regards their free ends, apply a clamping force onto the airfoil to fix the leading-edge element with the airfoil.

2. Method in accordance with Claim 1, **characterized in that** the partial elements (31, 32) are fabricated with accurate fit for applying a contact force by pretensioning.

3. Method in accordance with one of the Claims 1 or 2, **characterized in that** the partial elements (31, 32) are welded by a welding method, preferably a laser welding method, in the pretensioned state, when mounted on the airfoil (29).

4. Compressor blade in accordance with Claim 1 or 2, **characterized in that** the two partial elements (31, 32) are connected to one another by means of connecting elements (33), in particular by means of bolts or screws.

5. Method in accordance with one of the Claims 1 to 4, **characterized in that** between the partial elements (31, 32) a leading-edge element (34) is attached that extends at least over part of the length of the compressor blade.

6. Use of a blade in accordance with one of the Claims 1 to 5 for a fan (12) of an aircraft gas turbine.

## Revendications

1. Procédé destiné à fabriquer une aube de compresseur d'une turbine à gaz, dans lequel est fabriquée une pale (29) en plastique renforcé par des fibres et dans lequel un élément de bord d'attaque (30) est relié à la pale (29), sachant
- qu'un premier (31) et un second (32) éléments partiels de l'élément de bord d'attaque (30) sont fabriqués dans un matériau métallique, et
- qu'avant leur assemblage, les éléments partiels (31, 32) sont individuellement appliqués sur la pale (29) au moyen d'un procédé de collage, et
- que les deux éléments partiels sont assemblés entre eux par adhérence ou engagement positif pour former un seul élément de bord d'attaque,
**caractérisé en ce que**
les éléments partiels (31, 32), pour ce qui concerne leurs extrémités libres, appliquent un effort de serrage sur la pale pour fixer l'élément de bord d'attaque à la pale.

2. Procédé selon la revendication n° 1, **caractérisé en ce que** les éléments partiels (31, 32) sont fabriqués avec un ajustement précis pour appliquer une force de contact par précontrainte.

3. Procédé selon une des revendications n° 1 ou n° 2, **caractérisé en ce que** les éléments partiels (31, 32) sont soudés sur la pale (29) à l'état monté, précontraint, au moyen d'un procédé de soudage, de préférence d'un procédé de soudage au laser.

4. Aube de compresseur selon la revendication n° 1 ou n° 2, **caractérisée en ce que** les deux éléments partiels (31, 32) sont reliés entre eux par des éléments de jonction (33), en particulier par des boulons ou des vis.

5. Procédé selon une des revendications n° 1 à n° 4, **caractérisé en ce qu'**entre les éléments partiels (31, 32) est fixé un élément de bord d'attaque (34) s'étendant au moins sur une partie de la longueur de l'aube de compresseur.

6. Utilisation d'une aube selon une des revendications n° 1 à n° 5 pour une soufflante (12) d'une turbine à gaz aéronautique.
